# EUROPEAN PATENT SPECIFICATION

(11) **EP 2 065 962 B1**
(45) Date of publication and mention of the grant of the patent: **08.01.2014**
(21) Application number: 08100621.5
(22) Date of filing: 18.01.2008
(51) Int. Cl.: H01M 10/42, H01M 10/44, H01M 10/48

(54) **Battery systems with embedded battery cell monitors**
Batteriesysteme mit eingebetteten Batteriezellenmonitoren
Systèmes de batterie avec moniteurs de cellule de batterie

(30) Priority: 30.11.2007 US 998579
(43) Date of publication of application: 03.06.2009
(73) Proprietor: O2 Micro, Inc., Santa Clara, CA 95054 (US)
(72) Inventor: Densham, Bill, Los Gatos, CA 95032 (US); Keim, James, George Town, Grand Cayman (US); Popescu, Serban, San Carlos, CA 94070 (US)
(74) Representative: Lippert, Stachow & Partner

(56) References cited:
- WO-A-2006/082425
- US-A- 4 792 743
- US-A- 6 118 248
- US-A1- 2002 195 996
- US-A1- 2007 229 032

## Description

### BACKGROUND

### 1. Field of the Invention

The present invention relates to power systems and more particularly to battery systems with embedded cell monitors.

### 2. Description of the Related Art

Batteries are widely used in electronic devices for providing power to electronic devices, such as notebook computers, mobile phones, etc. However, temperature of a battery can rise when the battery is in charging or discharging. Lithium-ion batteries, especially cobalt cathode chemistry type batteries can reach a critical temperature (e.g., between 135 degrees Celsius and 145 degrees Celsius) when exothermic reaction becomes self-sustaining. High temperature can deteriorate batteries.

In a conventional electronic system, a thermistor can be employed to monitor a temperature of the battery pack. However, the thermistor cannot respond quickly to a high temperature of a battery cell that is located far from the thermistor. In the document US 6,118,248, a rechargeable battery is disclosed containing a controller that can comprise a pulse modulator. The pulse modulator can modulate an input signal and generate a control signal corresponding to battery condition or environment. Such control signal can generate a protection action.

### SUMMARY OF THE INVENTION

According to a first embodiment of the invention, a method for monitoring a battery pack is disclosed herein. The method comprises monitoring a battery cell in said battery pack by a cell monitor which is embedded in said battery cell and generating an alert signal indicative of a predetermined condition of said battery cell. A sensing circuit is operating in said cell monitor for detecting said predetermined condition of said battery cell and for generating a detecting signal. Further, a transmitter is operating in said cell monitor for receiving said detecting signal and for generating said alert signal according to said detecting signal from said sensing circuit. Moreover, a pulse generator is operating in said transmitter for receiving said detecting signal and for generating a plurality of pulses according to said detecting signal. The method further comprises operating of a switch coupled to said pulse generator for receiving said plurality of pulses and for generating said alert signal.
In another embodiment according to the invention, an oscillator is operating in said transmitter for receiving said detecting signal and for generating said alert signal according to said detecting signal. Further, a capacitor which is coupled to said oscillator is transferring said alert signal to said battery cell.
Further, a battery pack is disclosed herein. The battery pack is designed for realizing a method for monitoring a battery pack according to the invention.

### BRIEF DESCRIPTION OF THE DRAWINGS

Advantages of the present invention will be apparent from the following detailed description of exemplary embodiments thereof, which description should be considered in conjunction with the accompanying drawings, in which:

FIG. 1 illustrates a block diagram of a battery cell with an embedded cell monitor, in accordance with one embodiment of the present invention.

FIG. 2A illustrates a diagram of a battery cell with an embedded cell monitor, in accordance with one embodiment of the present invention.

FIG. 2B illustrates a diagram of a battery cell with an embedded cell monitor, in accordance with one embodiment of the present invention.

FIG. 3 illustrates a block diagram of a battery system, in accordance with one embodiment of the present invention.

FIG. 4 illustrates a block diagram of a battery system, in accordance with one embodiment of the present invention.

FIG. 5 illustrates a cross-section diagram of a die of an embedded cell monitor, in accordance with one embodiment of the present invention.

FIG. 6 illustrates a cross-section diagram of a die of an embedded cell monitor, in accordance with one embodiment of the present invention.

FIG. 7 illustrates a die of an embedded cell monitor, in accordance with one embodiment of the present invention.

FIG. 8 illustrates a block diagram of an electronic system, in accordance with one embodiment of the present invention.

FIG. 9 illustrates a flowchart of operations performed by a battery system, in accordance with one embodiment of the present invention.

### DETAILED DESCRIPTION

Battery packs/systems with embedded cell monitors are disclosed herein in the present disclosure. Since embodiments shown in the drawings are for illustrative purposes, some sub-components and/or peripheral components generally incorporated in the disclosure are omitted herein for brevity and clarity. In describing embodiments in accordance with the present invention, specific terminologies are employed for the sake of clarity. However, the disclosure of this patent specification is not intended to be limited to selected terminologies and specified embodiments. It is understood that each specific element includes all technical equivalents that operate in a similar manner.

In one embodiment, a battery pack including one or more battery cells is provided. A cell monitor is embedded in each battery cell and is operable for monitoring a corresponding battery cell and for generating an alert signal indicative of a predetermined condition (e.g., an undesirable condition, or a fault condition) of the corresponding battery cell. Each cell monitor includes a sensing circuit operable for detecting the predetermined condition of the corresponding battery cell and for generating a detecting signal. Each cell monitor further includes a transmitter operable for generating the alert signal according to the detecting signal of the cell monitor. The battery pack further includes a receiver for receiving the alert signal and includes a battery management unit for triggering a protection action (e.g., terminating battery pack charging or terminating battery pack discharging) for the battery pack according to the alert signal.

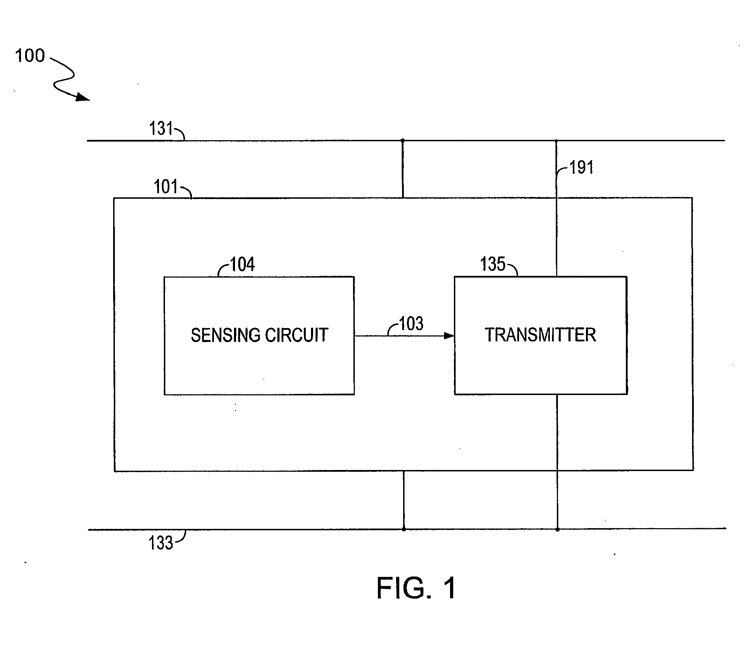

FIG. 1 illustrates a block diagram of a battery cell 100 with an embedded cell monitor 101, in accordance with one embodiment of the present invention. The battery cell 100 is in a battery pack (not shown in FIG. 1 for purposes of brevity and clarity). The cell monitor 101 is embedded in the battery cell 100 and is coupled between a positive terminal 131 and a negative terminal 133 of the battery cell 100. The cell monitor 101 is operable for monitoring the battery cell 100 and for generating an alert signal 191 indicative of a predetermined condition (e.g., an undesirable condition) of the battery cell 100. In one embodiment, the undesirable condition can include, but is not limited to, an over-voltage condition and an over-temperature condition. In one embodiment, the cell monitor 101 includes a sensing circuit 104 operable for detecting an undesirable condition of the battery cell 100 and for generating a detecting signal 103 indicative of the detected undesirable condition. The cell monitor 101 further includes a transmitter 135 operable for receiving the detecting signal 103 and for generating the alert signal 191 according to the detecting signal 103 from the sensing circuit 104. Advantageously, the battery pack can obtain the alert signal 191 and perform a corresponding protection action (e.g., terminating battery pack charging or terminating battery pack discharging) to protect the battery pack from being deteriorated in the undesirable condition.

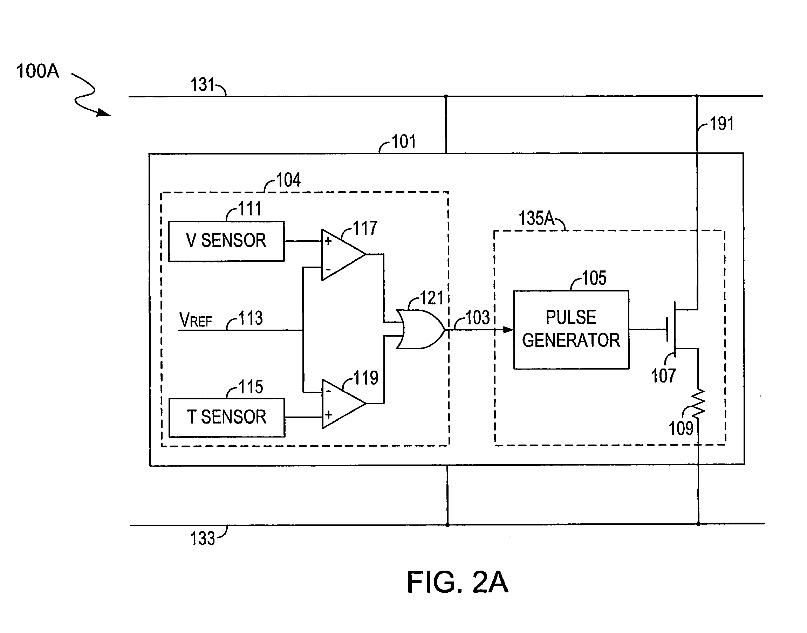

FIG. 2A illustrates a detailed diagram of a battery cell 100A with an embedded cell monitor 101, in accordance with one embodiment of the present invention. Elements that are labeled the same as in FIG. 1 have similar functions and hence any repetitive description of these elements is omitted herein for purposes of clarity and brevity. In one embodiment, the sensing circuit 104 is operable for detecting an undesirable condition of the battery cell 100A and for generating a detecting signal 103. The transmitter 135A is operable for generating an alert signal 191 according to the detecting signal 103 from the sensing circuit 104.

More specifically, the sensing circuit 104 can include a voltage sensor 111, a comparator 117, and a logic OR gate 121. In one embodiment, the voltage sensor 111 can be a resistor. The voltage sensor 111 is operable for monitoring a voltage of the battery cell 100A. The voltage monitored by the voltage sensor 111 is compared with a reference voltage 113 by the comparator 117. The reference voltage 113 can be a predetermined threshold voltage. If the voltage of the battery cell 100A is greater than the reference voltage 113, which may indicate an over-voltage condition, the comparator 117 generates a signal (e.g., with a high voltage level) to the logic OR gate 121.

In one embodiment, the sensing circuit 104 also includes a temperature sensor 115 and a comparator 119. In one embodiment, the temperature sensor 115 can be a thermistor. The temperature sensor 115 is operable for monitoring a temperature of the battery cell 100A and for generating a signal indicative of the temperature of the battery cell 100A. The signal indicative of the temperature of the battery cell 100A has a voltage level Vt. The voltage level Vt is compared with the reference voltage 113 by the comparator 119. If the voltage level Vt is greater than the reference voltage 113, which may indicate an over-temperature condition, the comparator 119 generates a signal (e.g., with a high voltage level) to the logic OR gate 121.

In one embodiment, the voltage sensor 111 and the temperature sensor 115 continuously monitor the voltage and the temperature of the battery cell 100A respectively. If an undesirable condition (e.g., an over-voltage condition and/or an over-temperature condition) occurs, the logic OR gate 121 can generate a detecting signal 103 (e.g., with a high voltage level) to the transmitter 135A. The transmitter 135A can generate an alert signal 191 to the battery pack according to the detecting signal 103 if the undesirable condition occurs. More specifically, if the voltage of the battery cell 100A is greater than a predetermined threshold and/or if the temperature of the battery cell 100A is greater than a predetermined threshold, the alert signal 191 will be generated. Consequently, corresponding actions can be performed to protect the battery pack.

In one embodiment, the transmitter 135A includes a pulse generator 105, a resistor 109, and a switch 107 (e.g., a transistor) coupled to the pulse generator 105. When the pulse generator 105 receives the detecting signal 103 indicative of the undesirable condition, the pulse generator 105 can generate a series of pulses to the switch 107 according to the detecting signal 103. In one embodiment, the pulse generator 105 can generate a series of high current pulses with a frequency f0 (e.g., a pulse width modulation signal with a duty cycle of 1%) in response to the detecting signal 103. The switch 107 is operable for receiving the series of pulses from the pulse generator 105 and for generating the alert signal 191. In one embodiment, the switch 107 is switched on and off periodically by the pulses. Thus, the alert signal 191 is shown as an AC signal having a frequency f0, in one embodiment. The cell voltage of the battery cell 100A drops when the switch 107 is on. Consequently, the cell voltage between terminals 131 and 133 can be shown as an AC voltage with the frequency f0 in response to the alert signal 191, in one embodiment.

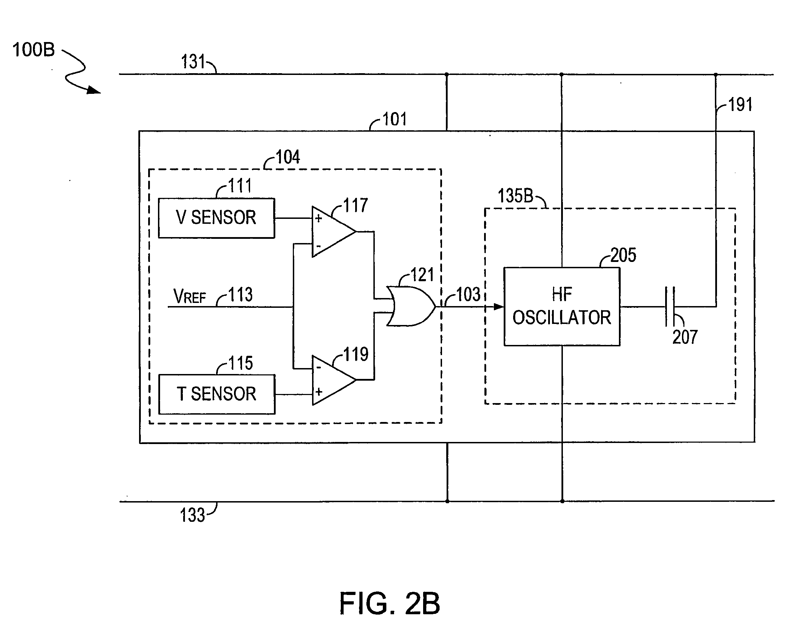

FIG. 2B illustrates another detailed diagram of a battery cell 100B with an embedded cell monitor 101, in accordance with one embodiment of the present invention. Elements that are labeled the same as in FIG. 1 and FIG. 1A have similar functions and will not be repetitively described herein for purposes of clarity and brevity. In one embodiment, the cell monitor 101 includes a transmitter 135B for receiving the detection signal 103 and for generating the alert signal 191 according to the detection signal 103. More specifically, the transmitter 135B includes an oscillator 205 and a capacitor 207 coupled to the oscillator 205, in one embodiment. In one embodiment, the oscillator 205 can be a radio frequency signal tone oscillator. In another embodiment, the oscillator 205 can be a radio frequency dual tone oscillator.

The oscillator 205 can receive the detecting signal 103 from the logic OR gate 121. In one embodiment, the oscillator 205 has a frequency fosc and generates an oscillation signal, e.g., a sinusoidal AC waveform having a high frequency fosc (e.g., 10MHz), as the alert signal 191 according to the detecting signal 103. The capacitor 207 is operable for transferring the alert signal 191 having the frequency fosc to the battery cell 100B. As a result, when the voltage sensor 111 detects an over-voltage condition, and/or the temperature sensor 115 detects an over-temperature condition, the cell voltage of the battery cell 100B can be shown as an AC voltage with the frequency fosc in response to the alert signal 191.

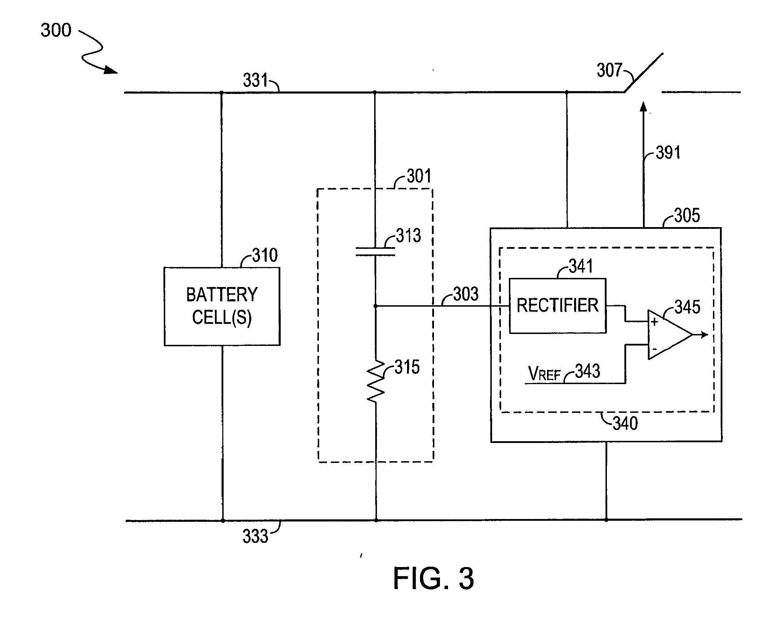

As discussed above in relation to FIG. 2A and FIG. 2B, the alert signal 191 can reflect an undesirable condition of the battery cell 100, e.g., an over-temperature and/or an over-voltage condition. Consequently, an AC voltage can be shown across the battery cell in response to the alert signal 191. Description will now be made with reference to FIG. 3 with respect to detecting such alert signal and performing corresponding actions if an undesirable condition occurs.

FIG. 3 shows a block diagram of a battery system 300 (e.g., a battery pack), in accordance with one embodiment of the present invention. The battery pack 300 includes one or more battery cells 310 coupled in series or in parallel, each of which can employ the configuration in FIG. 1, in one embodiment. A cell monitor is embedded in each of the battery cells 310. Therefore, battery cells 310 are monitored by embedded cell monitors individually and respectively. The battery pack 300 further includes a positive terminal 331, a negative terminal 333, a receiver 301, a battery management unit 305, and a switch 307 controlled by the battery management unit 305, in one embodiment. As described above in relation to FIG. 2A and FIG. 2B, when an undesirable condition (e.g., an over-temperature condition and/or an over-voltage condition) is detected in a battery cell, an AC voltage can be shown across the battery cell in response to the alert signal. Thus, an AC voltage can be shown between the positive terminal 331 and the negative terminal 333 of the battery pack 300, in one embodiment. The receiver 301 is coupled to the positive terminal 331 and the negative terminal 333 of the battery pack 300 and is operable for receiving the alert signal from a cell monitor by detecting an AC voltage between the positive terminal 331 and the negative terminal 333 of the battery pack 300, in one embodiment. The receiver 301 can also generate a driving signal 303 according to the alert signal.

In one embodiment, the receiver 301 includes a high pass filter shown as a capacitor 313 and a resistor 315 coupled in series for filtering noises associated with the battery pack 300. In one embodiment, if the alert signal (e.g., an AC signal) from battery cells 310 has the frequency f0 higher than a cutoff frequency of the high-pass filter, the receiver 301 can generate a driving signal 303. The battery management unit 305 can receive the driving signal 303 from the receiver 301 and generate a switching signal 391 according to the driving signal 303. Corresponding actions can be performed to protect the battery pack 300 in response to the switching signal 391. For example, the switching signal 391 turns off the switch 307 to terminate battery charging/discharging in order to protect the battery pack 300 from deterioration.

In one embodiment, the battery management unit 305 includes a detection circuit 340 for detecting the driving signal 303 from the receiver 301. Such configuration is for illustrative purpose and other configurations can also be employed in the battery management unit 305. The detection circuit 340 includes a rectifier 341 and a comparator 345, in one embodiment. The rectifier 341 can be a high frequency rectifier for receiving the driving signal 303 and for rectifying the driving signal 303. In one embodiment, the rectifier 341 generates a voltage signal according to the driving signal 303. Then the comparator 345 compares the voltage signal with a reference signal 343. If the voltage level of the voltage signal from the rectifier 341 is greater than the voltage level of the reference signal 343, the comparator 345 outputs a signal (e.g., with a high voltage level) to the battery management unit 305, in one embodiment. Then the battery management unit 305 can generate a switching signal 391 according to a result of the comparison to trigger a protection action for the battery pack 300. For example, the switching signal 391 can turn off the switch 307, which is coupled to the positive terminal 331 of the battery pack 300. Consequently, the battery pack 300 can be disconnected from a load or a charger (not shown in FIG. 3 for purposes of brevity and clarity) and can be protected from being deteriorated in the over-temperature condition and/or over-voltage condition.

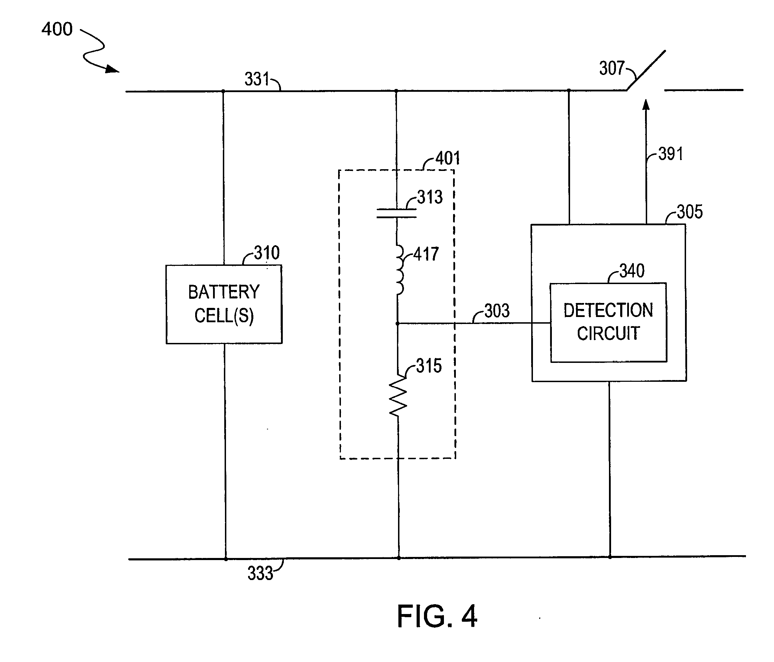

FIG. 4 illustrates a block diagram of a battery system 400 (e.g., a battery pack), in accordance with another embodiment of the present invention. Elements that are labeled the same as in FIG.3 have similar functions and will not be repetitively described herein for purposes of clarity and brevity. The battery pack 400 includes a receiver 401 similar to the receiver 301 in FIG. 3. The receiver 401 detects the alert signal from battery cells 310 and generates a driving signal 303 to the battery management unit 305. In one embodiment, the receiver 401 includes a band-pass filter shown as a capacitor 313, an inductor 417 and a resistor 315 in series for filtering noises associated with the battery pack 400. In one embodiment, a resonant frequency of the band-pass filter can be set to be equal to the frequency of the alert signal 191 in FIG. 2A and FIG. 2B. Therefore, the alert signal can pass through the band-pass filter. Thus, the receiver 401 can receive the high frequency alert signal from battery cells 310 and generate the driving signal 303. The battery management unit 305 can generate a switching signal 391 according to the driving signal 303. The switching signal 391 can trigger a protection action for the battery pack 400 by controlling the switch 307. For example, the switch 307 can be turned off by the switching signal 391 under the control of the battery management unit 305. Consequently, the battery pack 400 can be disconnected from a load or a charger (not shown in FIG. 4 for purposes of brevity and clarity) and can be protected from being deteriorated in undesirable conditions.

Accordingly, when a predetermined condition (e.g., an over-temperature condition and/or an over-voltage condition) is detected by a cell monitor 101 embedded in a battery cell 100 from battery cells 310, the cell monitor 101 can generate an alert signal. The alert signal can cause an AC voltage across the battery cell 100, in one embodiment. Therefore, an AC voltage can be shown between the positive terminal 331 and the negative terminal 333 of the battery pack 300 (400) in response to the alert signal. Then the receiver 301(401) can detect the alert signal and generate the driving signal 303 to the battery management unit 305. The battery management unit 305 can generate a switching signal 391 which can control the switch 307. The switch 307 is turned off under control of battery management unit 305 to protect the battery pack 300 (400) according to the driving signal 303. Advantageously, each cell in battery cells 310 is monitored by an individual embedded cell monitor. If one of the battery cells 310 is undergoing an over-temperature and/or over-voltage condition, the cell monitor in that battery cell can transmit an alert signal to alert the battery pack 300 (400). Consequently, corresponding actions can be performed to protect the battery pack 300 (400) from being deteriorated in undesirable conditions.

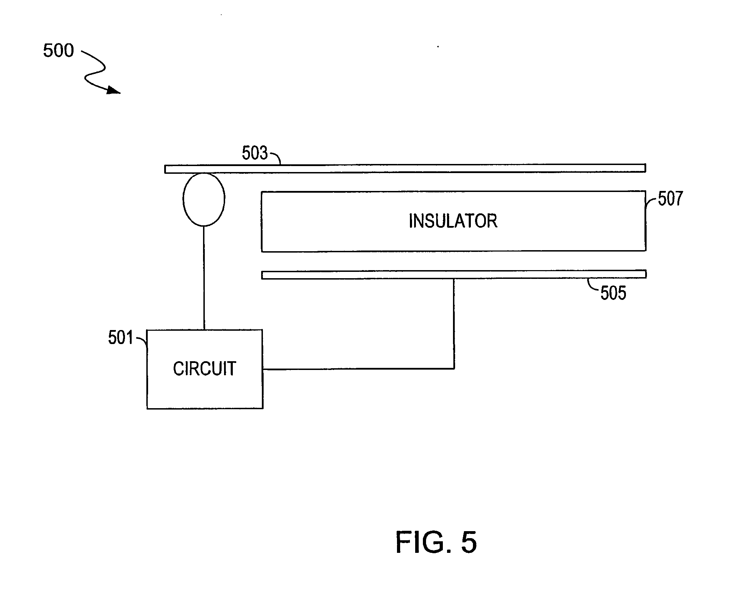

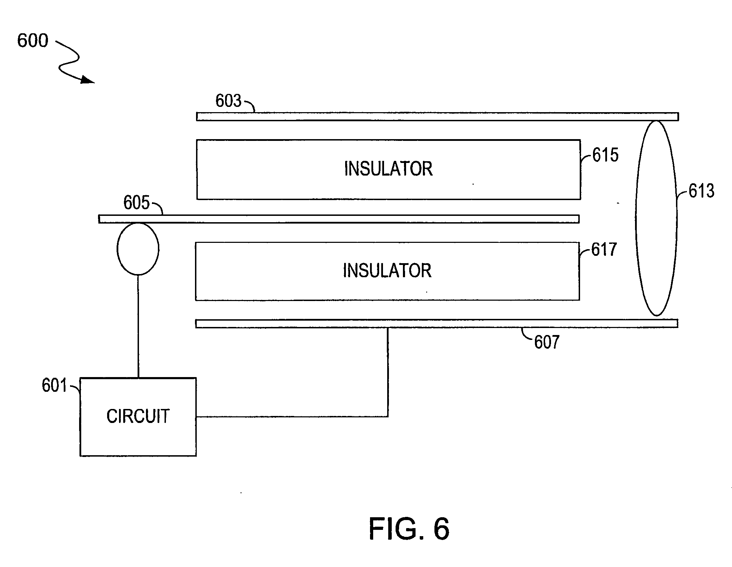

As described in FIG. 2B, the transmitter 135B includes the capacitor 207 for transferring the alert signal from the oscillator 205 to the positive terminal 131 of the battery cell 100B. The following description made with reference to FIG. 5 and FIG. 6 describes an exemplary implementation of such capacitor in fabrication process.

FIG. 5 shows a cross-section diagram of a die 500, in which a cell monitor (e.g., the cell monitor 101 in FIG. 2B) is fabricated, in accordance with one embodiment of the present invention. Referring to FIG. 5, the die 500 includes a metal layer 503, a metal layer 505, and an insulator 507. The metal layer 503 and the metal layer 505 are insulated by the insulator 507. A circuit 501 including the sensing circuit 104 and the oscillator 205 in FIG. 2B is coupled to the metal layer 503 and the metal layer 505. During fabrication of the die 500, the metal layer 503 and the metal layer 505 are formed when fabricating the sensing circuit 104 and the oscillator 205. Advantageously, the insulator 507 can be formed between the metal layer 503 and the metal layer 507, and thus the metal layer 503, the insulator 507 and the metal layer 505 can constitute the capacitor 207 with a relatively large capacitance. Therefore, this configuration can avoid the formation of two extra metal layers for the purpose of the capacitor fabrication and the cost of the die 500 can be decreased.

FIG. 6 shows another cross-section diagram of a die 600, in which the cell monitor 101 is fabricated, in accordance with one embodiment of the present invention. The die 600 includes multiple metal layers, e.g., a metal layer 603, a metal layer 605, and a metal layer 607. Metal layers are separated by an insulator 615 and an insulator 617. In one embodiment, the metal layer 603 is coupled to the metal layer 607 through a via 613. In one embodiment, a circuit 601 including the sensing circuit 104 and the oscillator 205 in FIG. 2B is coupled to the metal layer 605 and the metal layer 607. During fabrication of the die 600, the metal layer 603, the metal layer 605, and the metal layer 607 are formed when fabricating the sensing circuit 104 and the oscillator 205. Advantageously, multiple metal layers can extend the number of vertical layers of capacitors that can be provided. Therefore, the metal layer 603, the metal layer 605 and the insulator 615 can constitute a first capacitor, the metal layer 605, the metal layer 607 and the insulator 617 can constitute a second capacitor. The first capacitor and the second capacitor are coupled in parallel as shown in. FIG. 6. Advantageously, the capacitor 207 can include the first capacitor and second capacitor in parallel. Thus, the capacitance of the parallel connected capacitors in FIG. 6 can be twice as the capacitance of the capacitor in FIG. 5. In one embodiment, extra metal layers are saved to form the capacitor configuration and the cost of the die 600 can be reduced.

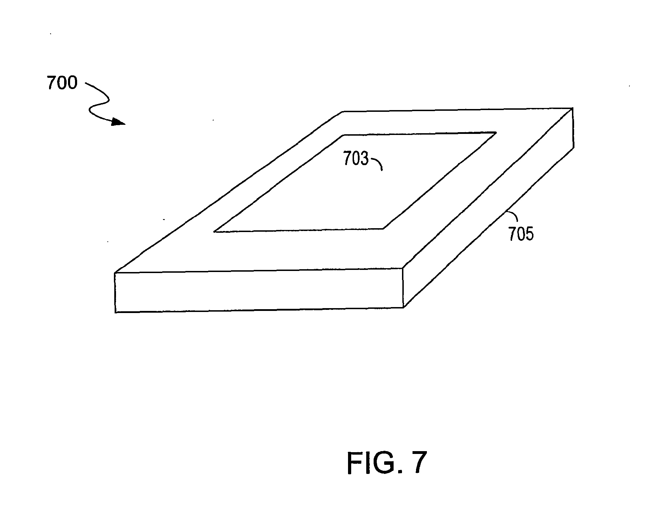

FIG. 7 illustrates a cell monitor die 700 of the cell monitor 101, in accordance with one embodiment of the present invention. In one embodiment, the cell monitor 101 is fabricated on the cell monitor die 700. The cell monitor die 700 includes a bottom 705 (e.g., a substrate) and a top 703 (e.g., metal layer 503 in FIG. 5 or metal layer 603 in FIG. 6). Because the bottom 705 is ground, the bottom 705 can be coupled to the negative terminal of the battery cell 100, in one embodiment. The top 703 is a positive contact, which can be coupled to the positive terminal 131 of the battery cell 100 by a single wire, in one embodiment. Therefore, a single wire can embed the cell monitor die into the battery cell 100. Advantageously, the cell monitor die 700 can be integrated in the top cap of the battery cell 100 in one embodiment, or in the center of the battery cell 100 in another embodiment.

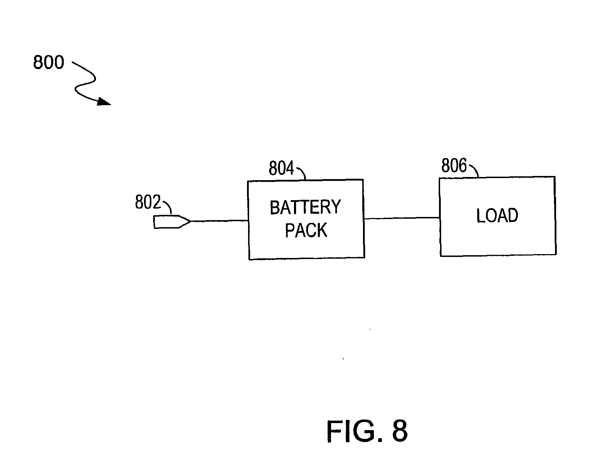

The battery pack 300 (400) can be used in many kinds of electronic systems. FIG. 8 illustrates an electronic system 800, such as an electronic vehicle, a computer, etc., in accordance with one embodiment of the present invention. In one embodiment, the electronic system 800 can include a battery pack 804 and a load 806 coupled to the battery pack 804. In one embodiment, the load 806 can include, but is not limited to, a vehicle motor, a computer system, etc. In one embodiment, the electronic system 800 includes an input terminal 802 that can be coupled to an adapter (not shown in FIG. 8 for purposes of brevity and clarity). The adapter can charge the battery pack 804 in a certain condition. The battery pack 804 can supply power to the load 806. In one embodiment, the battery pack 804 employs the configuration as shown in FIG. 3/FIG. 4. The battery pack 804 includes one or more battery cells, each of which is embedded with a cell monitor to monitor the battery cell. Therefore, the battery pack 804 can be monitored accurately and be protected from any undesirable conditions of each battery cell thereof, in one embodiment.

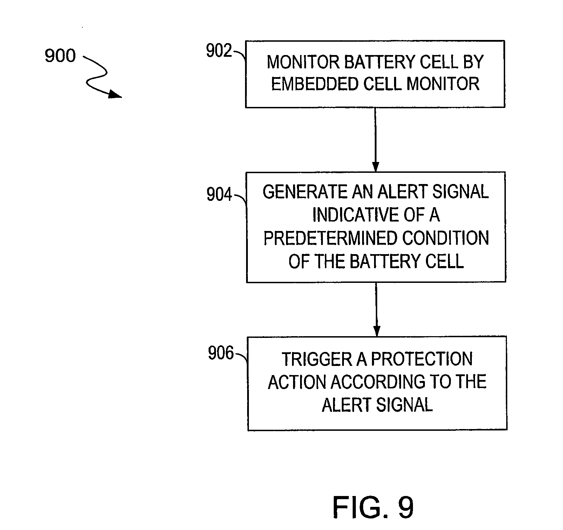

FIG. 9 illustrates a flowchart 900 of operations performed by a battery system, in accordance with one embodiment of the present invention. The battery system can employ the configuration as shown in FIG. 3/FIG. 4, in one embodiment. FIG. 9 is described in combination with FIG. 1, FIG. 2A, and FIG. 2B. In block 902, each battery cell in a battery pack is monitored respectively by a corresponding cell monitor 101 and thus an alert signal 191 indicative of a predetermined condition of the associated battery cell can be generated. The cell monitor 101 is embedded in each battery cell. In one embodiment, a temperature sensor 115 can monitor a temperature of the battery cell and thus the cell monitor 101 generates the alert signal 191 if the temperature of the battery cell is greater than a predetermined threshold. A voltage sensor 111 can monitor a voltage of the battery cell and thus the cell monitor 101 generates the alert signal 191 if the voltage of the battery cell is greater than a predetermined threshold. In block 904, the cell monitor 101 generates an alert signal 191 indicative of a predetermined condition of the battery cell. In one embodiment, the predetermined condition can be an undesirable condition (e.g., over-voltage and/or over-temperature condition). In block 906, a protection action (e.g., terminate battery charging/discharging) can be triggered according to the alert signal 191. In one embodiment, the battery cell can be disconnected from a load or a charger in response to the alert signal.

Accordingly, a battery pack is provided in the present disclosure. A cell monitor is embedded in each battery cell of the battery pack for monitoring the corresponding battery cell. When an undesirable condition (e.g., over-temperature condition and/or over-voltage condition) is detected in a battery cell, the corresponding cell monitor can generate an alert signal to the battery pack. A receiver in the battery pack can receive the alert signal and generate a driving signal to a battery management unit. The battery management unit can take corresponding action to protect the battery pack from being deteriorated in the undesirable condition, e.g., disabling connection between the battery pack and other circuitry.

As disclosed hereinabove, each battery cell in a battery pack includes a cell monitor for monitoring a corresponding battery cell individually. Once an undesirable condition is detected by a cell monitor in the corresponding battery cell, the battery pack can be notified about the undesirable condition. Thus, the cell monitoring can be relatively accurate and the speed of responding to the undesirable condition can be relatively quick.

The embodiments that have been described herein, however, are some of the several that utilize this invention and are set forth here by way of illustration but not of limitation. It is obvious that many other embodiments, which will be readily apparent to those skilled in the art, may be made without departing from the scope of the invention as defined in the appended claims. Furthermore, although elements of the invention may be described or claimed in the singular, the plural is contemplated unless limitation to the singular is explicitly stated.

## Claims

1. A method for monitoring a battery pack (300), comprising:
monitoring a battery cell (100) in said battery pack (300) by a cell monitor (101) which is embedded in said battery cell (100); and
generating an alert signal (191) indicative of a predetermined condition of said battery cell (100),
wherein in said cell monitor (101) a sensing circuit (104) is operating for detecting said predetermined condition of said battery cell (100) and for generating a detecting signal (103), as well as a transmitter (135) for receiving said detecting signal (103) and for generating said alert signal (191) according to said detecting signal (103) from said sensing circuit (104),
**characterized in that** in said transmitter (135) a pulse generator (105) is operating for receiving said detecting signal (103) and for generating a plurality of pulses according to said detecting signal (103), wherein
a switch (107) coupled to said pulse generator (105) is operating for receiving said plurality of pulses and for generating said alert signal (191).

2. A method for monitoring a battery pack (300), comprising:
monitoring a battery cell (100) in said battery pack (300) by a cell monitor (101) which is embedded in said battery cell (100); and
generating an alert signal (191) indicative of a predetermined condition of said battery cell (100),
wherein in said cell monitor (101) a sensing circuit (104) is operating for detecting said predetermined condition of said battery cell (100) and for generating a detecting signal (103), as well as a transmitter (135) for receiving said detecting signal (103) and for generating said alert signal (191) according to said detecting signal (103) from said sensing circuit (104),
**characterized in that** in said transmitter (135) an oscillator (205) is operating for receiving said detecting signal (103) and for generating said alert signal according to said detecting signal (103), wherein
a capacitor (207) coupled to said oscillator (205) is transferring said alert signal (191) to said battery cell (100).

3. The method according to claim 1 or 2, **characterized in that** a receiver (301) coupled to a positive terminal (131, 331) and a negative terminal (133, 333) of said battery pack (300)is receiving said alert signal (191) and generating a driving signal (303) according to said alert signal (191); and **in that** a
a battery management unit (305) is receiving said driving signal (303) from said receiver (301) and generating a switching signal (391) according to said driving signal (303), wherein said switching signal (391) triggers a protection action for said battery pack (300).

4. The method according to claim 3, **characterized in that** a rectifier (341) is receiving said driving signal (303) and generating a voltage signal; and **in that** a
comparator (345) is comparing said voltage signal with a reference signal (343), wherein said switching signal (391) is generated according to a result of said comparison.

5. The method according to one of claims 1 to 4, **characterized in**:
monitoring a temperature of said battery cell (100); and
generating said alert signal (191) if said temperature of said battery cell (100) is greater than a predetermined threshold.

6. The method according to one of claims 1 to 4, **characterized in**: monitoring a voltage of said battery cell (100); and
generating said alert signal (191) if said voltage of said battery cell is greater than a predetermined threshold.

7. The method according to one of claims 1 to 6, **characterized in**:
triggering a protection action for said battery pack according to said alert signal (191).

8. A battery pack (300) designed for realizing the method according to one of claims 1 to 7.

9. The battery pack (300) of claim 8, **characterized in that** said receiver (301) comprises a high-pass filter.

10. The battery pack (300) according to one of claims 8 or 9, **characterized in that** said receiver (301) comprises a band-pass filter.

## Patentansprüche

1. Verfahren zum Überwachen eines Batteriepacks (300), umfassend:
das Überwachen einer Batteriezelle (100) in dem Batteriepack (300) durch einen Zell-Monitor (101), der in der Batteriezelle (100) eingebettet ist; und
das Erzeugen eines Alarmsignals (191) als Hinweis auf eine vorgegebene Kondition der Batteriezelle (100), wobei in dem Zell-Monitor (101) eine Sensorschaltung (104) zum Detektieren der vorgenannten Kondition der Batteriezelle (100) und zum Erzeugen eines Detektionssignals (103) sowie ein Transmitter (135) für den Empfang des Detektionssignals (103) und für die Erzeugung des Alarmsignals (191) gemäß dem Detektionssignal (103) von der Sensorschaltung (104) arbeiten, **dadurch gekennzeichnet, dass** in dem Transmitter (135) ein Impulsgenerator (105) für den Empfang des Detektionssignals (103) und
zum Erzeugen einer Mehrzahl von Impulsen gemäß dem Detektionssignal (103) arbeitet, wobei ein mit dem Impulsgenerator (105) gekoppelter Schalter (107) für den Empfang der Mehrzahl von Impulsen und zum Erzeugen des Alarmsignals (191) arbeitet.

2. Verfahren zum Überwachen eines Batteriepacks (300), umfassend:
das Überwachen einer Batteriezelle (100) in dem Batteriepack (300) durch einen Zell-Monitor (101), der in der Batteriezelle (100) eingebettet ist; und
das Erzeugen eines Alarmsignals (191) als Hinweis auf eine vorgegebene Kondition der Batteriezelle (100), wobei in dem Zell-Monitor (101) eine Sensorschaltung (104) zum Detektieren der vorgenannten Kondition der Batteriezelle (100) und zum Erzeugen eines Detektionssignals (103) sowie ein Transmitter (135) für den Empfang des Detektionssignals (103) und für die Erzeugung des Alarmsignals (191) gemäß dem Detektionssignal (103) von der Sensorschaltung (104) arbeiten, **dadurch gekennzeichnet, dass** in dem Transmitter (135) ein Oszillator (205) arbeitet für den Empfang des Detektionssignals (103) und zum Erzeugen des Alarmsignals entsprechend dem Detektionssignal (103), wobei ein mit dem Oszillator (205) gekoppelter Kondensator (207) das Alarmsignal (191) zur Batteriezelle (100) überträgt.

3. Verfahren nach Anspruch 1 oder 2, **dadurch gekennzeichnet, dass** ein Empfänger (301), der mit einem positiven Anschluss (131, 331) und einem negativen Anschluss (133, 333) des Batteriepacks (300) verbunden ist, das Alarmsignal (191) empfängt und entsprechend dem Alarmsignal (191) ein Antriebssignal (303) erzeugt und dass eine Batterie-Managementeinheit (305) das Antriebssignal (303) von dem Empfänger (301) empfängt und entsprechend dem Antriebssignal (303) ein Schaltsignal (391) erzeugt, wobei das Schaltsignal (391) eine Schutzmaßnahme für den Batteriepack (300) auslöst.

4. Verfahren nach Anspruch 3, **dadurch gekennzeichnet, dass** ein Stromrichter (341) das Antriebssignal (303) empfängt und ein Spannungssignal erzeugt und dass ein Komparator (345) das Spannungssignal mit einem Referenzsignal (343) vergleicht, wobei das Schaltsignal (391) gemäß einem Ergebnis des Vergleichs erzeugt wird.

5. Verfahren nach einem der Ansprüche 1 bis 4, **gekennzeichnet durch**:
die Überwachung einer Temperatur der Batteriezelle (100) und
die Erzeugung eines Alarmsignals (191), wenn die Temperatur der Batteriezelle (100) höher ist als ein vorgegebener Schwellwert.

6. Verfahren nach einem der Ansprüche 1 bis 4, **gekennzeichnet durch**:
die Überwachung einer Spannung der Batteriezelle (100) und
die Erzeugung des Alarmsignals (191), wenn die Spannung der Batteriezelle (100) höher ist als ein vorgegebener Schwellwert.

7. Verfahren nach einem der Ansprüche 1 bis 6, **gekennzeichnet durch**:
das Auslösen einer Schutzmaßnahme für den Batteriepack entsprechend dem Alarmsignal (191).

8. Batteriepack (300), der für die Durchführung des Verfahrens gemäß einem der Ansprüche 1 bis 7 ausgebildet ist.

9. Batteriepack (300) nach Anspruch 8, **dadurch gekennzeichnet, dass** der Empfänger (301) ein Hochpassfilter umfasst.

10. Batteriepack (300) nach einem der Ansprüche 8 oder 9, **dadurch gekennzeichnet, dass** der Empfänger (301) ein Bandpassfilter umfasst.

## Revendications

1. Procédé pour surveiller un pack de batteries (300), comprenant les étapes de :
surveiller un élément de batterie (100) dans ledit pack de batteries (300) par un moniteur d'élément (101) qui est encastré dans ledit élément de batterie (100) ; et
générer un signal d'alarme (191) indicatif à une condition prédéterminée de l'élément de batterie (100), dans lequel procédé un circuit détecteur (104) dans ledit moniteur d'élément (101) fonctionne pour détecter ladite condition prédéterminée de l'élément de batterie (100) et pour générer un signal de détection (103), et un transmetteur (135) fonctionne pour recevoir ledit signal de détection (103) et pour générer ledit signal d'alarme (191) conformément audit signal de détection (103) dudit circuit de détection (104),
**caractérisé en ce qu'**il fonctionne, dans ledit transmetteur (135), un générateur d'impulsions (105) pour recevoir ledit signal de détection (103) et pour générer une pluralité d'impulsions conformément audit signal de détection (103), un interrupteur (107) couplé audit générateur d'impulsions (105) fonctionnant pour recevoir ladite pluralité d'impulsions et pour générer ledit signal d'alarme (191).

2. Procédé pour surveiller un pack de batteries (300), comprenant les étapes de :
surveiller un élément de batterie (100) dans ledit pack de batteries (300) par un moniteur d'élément (101) qui est encastré dans ledit élément de batterie (100) ; et
générer un signal d'alarme (191) indicatif à une condition prédéterminée de l'élément de batterie (100), dans lequel procédé un circuit détecteur (104) dans ledit moniteur d'élément (101) fonctionne pour détecter ladite condition prédéterminée de l'élément de batterie (100) et pour générer un signal de détection (103), et un transmetteur (135) fonctionne pour recevoir ledit signal de détection (103) et pour générer ledit signal d'alarme (191) conformément audit signal de détection (103) dudit circuit de détection (104),
**caractérisé en ce qu'**il fonctionne, dans ledit transmetteur (135), un oscillateur (205) pour recevoir ledit signal de détection (103) et pour générer ledit signal d'alarme conformément audit signal de détection (103), un condensateur (207) couplé audit oscillateur (205) transférant ledit signal d'alarme (191) audit élément de batterie (100).

3. Procédé selon la revendication 1 ou 2, **caractérisé en ce qu'**un récepteur (301) couplé à une borne positive (131, 331) et une borne négative (133, 333) dudit pack de batteries (300) reçoit ledit signal d'alarme (191) et génère un signal de commande (303) conformément audit signal d'alarme (191) ; et **en ce**
**qu'**une unité de gestion de batterie (305) reçoit ledit signal de commande (303) du récepteur (301) et génère un signal de commutation (391) conformément audit signal de commande (303), ledit signal de commande (391) déclenchant une fonction protectrice pour ledit pack de batteries (300).

4. Procédé selon la revendication 3, **caractérisé en ce qu'**un convertisseur (34) reçoit ledit signal de commande (303) et génère un signal de tension ; et **en ce qu'**un comparateur (345) compare ledit signal de tension avec un signal de référence (343), ledit signal de commutation (391) étant généré conformément au résultat de ladite comparaison.

5. Procédé selon l'une des revendications 1 à 4, **caractérisé par** :
la surveillance d'une température dudit élément de batterie (100) et par la génération d'un signal d'alarme (191) lorsque ladite température de l'élément de batterie (100) est supérieure à un seuil prédéterminé.

6. Procédé selon l'une des revendications 1 à 4, **caractérisé par** :
la surveillance d'une tension dudit élément de batterie (100) ; et par la génération dudit signal d'alarme (191) lorsque ladite tension de l'élément de batterie (100) est supérieure à un seuil prédéterminé.

7. Procédé selon l'une des revendications 1 à 6, **caractérisé par** :
le déclenchement d'une fonction protectrice pour le pack de batteries conformément audit signal d'alarme (191).

8. Pack de batteries (300), conçu pour implémenter le procédé selon l'une des revendications 1 à 7.

9. Pack de batteries (300) selon la revendication 8, **caractérisé en ce que** le récepteur (301) comporte un filtre passe-haut.

10. Pack de batteries (300) selon l'une des revendications 8 ou 9, **caractérisé en ce que** le récepteur (301) comporte un filtre passe-bande.
